# EUROPÄISCHE PATENTSCHRIFT

(11) **EP 1 873 597 B1**
(45) Veröffentlichungstag und Bekanntmachung des Hinweises auf die Patenterteilung: **13.10.2010**
(21) Anmeldenummer: 06013606.6
(22) Anmeldetag: 30.06.2006
(51) Int. Cl.: G05B 19/042, G01D 9/00

(54) **Anschlussmodul für Sensoren**
Connection module for sensors
Module de connexion pour capteurs

(43) Veröffentlichungstag der Anmeldung: 02.01.2008
(73) Patentinhaber: SICK AG, 79183 Waldkirch (DE)
(72) Erfinder: Gehring, Roland, 79215 Elzach-Prechtal (DE); Singler, Matthias, 79297 Winden (DE); Esselborn, Friedrich, 79183 Waldkirch (DE); Aschenbrenner, Johannes, 79312 Emmendingen (DE)
(74) Vertreter: Manitz, Finsterwald & Partner GbR

(56) Entgegenhaltungen:
- EP-A- 1 533 770
- EP-A2- 1 229 414
- DE-A1- 19 847 701
- US-A1- 2003 040 881
- US-B1- 6 571 132

## Beschreibung

Die Erfindung betrifft ein Anschlussmodul zum Anschließen eines Sensors an einen Feldbus sowie ein Verfahren zum Betreiben eines derartigen Anschlussmoduls.

Ein Feldbus ist ein industrielles Kommunikationssystem, das z.B. eine Vielzahl von Feldgeräten wie Messfühler (Sensoren), Stellglieder und Antriebe (Aktoren) mit einem Steuerungsgerät verbindet. Ein Feldbussystem ersetzt dabei in der Regel eine aufwändige parallele Verdrahtung der Feldbuskomponenten durch eine wesentlich kostengünstigere serielle Vernetzung zur digitalen Datenübertragung.

Im einfachsten Fall werden Sensoren direkt an den Feldbus angeschlossen. Eine Verbesserung gegenüber dem Direktanschluss ist beispielsweise in der DE 103 53 345 A1 beschrieben, wonach zur Ankopplung eines Sensors an den Feldbus so genannte Feldbus-Gateways dienen. Sie bewirken ein Konvertieren von Daten im Datenformat des Feldbusses in ein Datenformat, das vom Sensor verstanden wird, und umgekehrt, um so eine problemlose Kommunikation zwischen Sensor und Feldbus zu ermöglichen. Damit ist nicht nur der hardwaremäßige Anschluss teilweise sehr kleiner Sensoren an den Feldbus möglich, sondern auch ein Anschluss eines bestimmten Sensortyps an verschiedene Bussysteme. Die Anschlussfunktionalität wird dabei vom Sensor in das Gateway verlegt.

Derartige externe, d.h. nicht im Sensor integrierte Gateways haben meist feste Identifikationsnummern im jeweiligen Kommunikationssystem und erscheinen gegenüber dem Feldbus auch direkt als Gateway. Ein an das Gateway angeschlossener Sensor hingegen ist vom Feldbus aus nicht direkt, sondern vielmehr nur über das Gateway ansprechbar.

Von einem Sensor können verschiedene Datenpakete, so genannte Objekte, an den Feldbus übermittelt werden. Derartige Objekte können beispielsweise bei einem Temperatursensor die aktuelle Temperatur oder der Maximalwert der jeweils gemessenen Temperaturen sein.

Bisher verwendete Gateways können nur bestimmte, fest vorgegebene Objekte zwischen Sensor und Feldbus übermitteln. Bildlich kann man sich dies so vorstellen, dass in einem Gateway fest vorgegebene "Regale" vorhanden sind, in die die Objekte des Sensors hineingelegt werden, von wo aus sie vom Feldbus "abgeholt" werden können. Dies funktioniert allerdings nur für solche Objekte, für die ein passendes "Regalfach" vorhanden ist. Objekte, für die kein passendes "Regalfach" vorhanden ist, können nicht an den Feldbus übermittelt werden, was letztlich bedeutet, dass dem Feldbus auf nachteilige Weise nur eine eingeschränkte Funktionalität des Sensors zur Verfügung steht.

Dieser Nachteil kann auf aufwändige Weise nur dadurch beseitigt werden, dass für jeden Sensortyp angepasste Feldbus-Gateways vorgesehen werden, welche dazu in der Lage sind, sämtliche Objekte eines Sensors an den Feldbus zu übermitteln.

Ferner ist in US 2003/0040881 A1 ein System und Verfahren zum Messen, zur Datenerfassung und zur Durchführung von Steueroperationen offenbart, bei dem ein Messmodul von einem Sensor aufgenommene Signale empfängt und diese Signaldaten nach einer Signalaufbereitung und/oder Signalkonvertierung in einem proprietären Format einem Träger zur Verfügung stellt, welcher über ein Netzwerk an ein Computersystem gekoppelt ist. Der Träger umfasst einen Prozessor und Speicher und kann unabhängig vom Computer arbeiten. Weiterhin werden zwischen Träger und Messmodul Interfaceprotokoll-Informationen ausgetauscht, woraufhin der Träger sich selbst bzw. eine Prozessor und Speicher umfassende Funktionseinheit des Trägers programmiert.

Es ist Aufgabe der vorliegenden Erfindung, die Einbindung von Sensoren in ein Feldbusnetzwerk zu erleichtern.

Diese Aufgabe wird durch ein Anschlussmodul mit den Merkmalen des Anspruchs 1 gelöst, und insbesondere durch ein Anschlussmodul zum Anschließen eines Sensors, insbesondere eines optoelektronischen Sensors, an einen Feldbus, mit wenigstens einer Sensorschnittstelle zum Verbinden des Anschlussmoduls mit einer Schnittstelle des Sensors, wenigstens einer Busschnittstelle zum Verbinden des Anschlussmoduls mit einer Schnittstelle eines Feldbusses und einer Schaltung zum Datenaustausch, um Daten über die Sensorschnittstelle von dem Sensor zu empfangen und bezüglich ihres Formates zu konvertieren und um die konvertierten Daten an der Busschnittstelle auszugeben, wobei die Schaltung zum Datenaustausch einen Speicher zur Zwischenspeicherung einer von der Sensorschnittstelle empfangenen sensorspezifischen Steuerungs- oder Beschreibungsdatei umfasst, wobei die Steuerungs- oder Beschreibungsdatei in der Schaltung derart verarbeitbar ist, dass das Anschlussmodul gegenüber dem Feldbus das Verhalten des jeweils angeschlossenen Sensors zeigt.

Übertragen auf das eingangs erwähnte Bild eines Regals bedeutet dies, dass durch das Erzeugen oder Übermitteln der Steuerungsdatei im Anschlussmodul ein neues "Regal aufgebaut" wird, welches genau einem gleichartigen, im Sensor existenten, alle möglichen Objekte des Sensors aufnehmenden Regal entspricht. Somit können sämtliche Objekte des Sensors an den Feldbus übermittelt werden.
Auf diese Weise kann erreicht werden, dass das Anschlussmodul mit dem Feldbus gewissermaßen als Stellvertreter des Sensors kommuniziert, so dass das Anschlussmodul gegenüber dem Feldbus letztlich als Sensor und nicht als Gateway bzw. Anschlussmodul erscheint.

Da das erfindungsgemäße Anschlussmodul durch das Erzeugen oder Übermitteln der Steuerungsdatei in seiner Funktionalität jederzeit veränderbar und an die jeweiligen Gegebenheiten anpassbar ist, ist es auch für bei Produktion des Anschlussmoduls noch nicht existente, zukünftig noch zu entwickelnde Sensoren ohne Modifikation verwendbar. Dadurch kann der Benutzer Sensoren beliebig austauschen, ohne gleichzeitig auch das Anschlussmodul austauschen zu müssen.

Bei einer bevorzugten Ausführungsform der Erfindung kann die Schaltung einen durch die gespeicherte und/oder durch eine auf Basis der Beschreibungsdatei erzeugte Steuerungsdatei programmierbaren Prozessor umfassen.
Bei der ersten Variante dieser Ausführungsform wird eine bereits erzeugte, im Sensor abgespeicherte Steuerungsdatei an das Anschlussmodul übertragen. In dieser Steuerungsdatei, die bereits das fertige, im Prozessor des Anschlussmoduls ablaufende Programm darstellt, können ebenfalls Informationen über sämtliche Objekte des Sensors enthalten sein.
Bei der zweiten Variante der Ausführungsform umfasst die im Sensor gespeicherte Beschreibungsdatei ein Verzeichnis der Objekte, die der Sensor empfangen und/oder zur Verfügung stellen kann. Diese können beispielsweise Messwerte, Parameter, Statusinformationen, etc. sein. Aus der Beschreibungsdatei wird im erfindungsgemäßen Anschlussmodul dann automatisch eine Steuerungsdatei, also ein Programm zur Steuerung des Datenaustausches zwischen Sensor- und Busschnittstelle erzeugt, welches die Arbeitsweise des im Anschlussmodul vorhandenen Prozessors bestimmt.

Vorteilhafterweise kann die Steuerungs- oder Beschreibungsdatei eine sensorspezifische Geräteidentifikation für den jeweiligen Feldbus enthalten.

Die Sensorschnittstelle und/oder die Busschnittstelle können insbesondere zur seriellen Datenkommunikation ausgelegt sein, so dass der zu betreibende Verkabelungsaufwand minimal gehalten werden kann.

In einer bevorzugten Ausführungsform ist die Schaltung zum Datenaustausch auch zum Empfang von Daten von der Busschnittstelle ausgelegt. Hierdurch ist es möglich, dass das Anschlussmodul Daten von einem weiteren, am Feldbus angeschlossenen Gerät entgegennehmen kann.

Vorzugsweise kann die Schaltung zum Datenaustausch auch zur Ausgabe der von der Busschnittstelle empfangenen Daten an der Sensorschnittstelle ausgelegt sein. Dadurch ist es möglich, dass am Feldbus angeschlossene Geräte Daten an den Sensor übermitteln können, so dass letztlich ein bidirektionaler Betrieb des Anschlussmoduls möglich wird.

Weiterhin bevorzugt kann das Anschlussmodul zur Überwachung der Anwesenheit und/oder Funktionsfähigkeit des Sensors ausgebildet sein. Eine etwaige Unterbrechung der Verbindungsleitung zum Sensor oder ein Ausfall des Sensors kann so dem Feldbus mitgeteilt werden. Auf diese Weise erhalten weitere am Feldbus angeschlossene Geräte Informationen über eine Betriebsbereitschaft des an das Anschlussmodul angeschlossenen Sensors.

In einer vorteilhaften Weiterbildung ist das Anschlussmodul zur selbsttätigen Anmeldung am Feldbus nach einem Anschließen oder Austauschen des Sensors und/oder nach einer Unterbrechung der Datenkommunikation mit dem Sensor ausgebildet. Falls der Sensor ersetzt wurde oder eine Störung in der Datenkommunikation beseitigt wurde, ist es somit nicht erforderlich, eine durch einen Benutzer veranlasste Initialisierung des Anschlussmoduls oder gar des gesamten Feldbusnetzes durchzuführen.

Bevorzugt kann die Sensorschnittstelle zur Datenkommunikation mit einer Mehrzahl von verschiedenen Sensortypen ausgebildet sein.

Vorteilhafterweise kann die Sensorschnittstelle dabei zur Kommunikation mit einer Standardschnittstelle eines Sensors, insbesondere mit Standardschnittstellen verschiedener Sensortypen ausgebildet sein. Es ist somit nicht erforderlich, für jeden in einem Feldbusnetz verwendeten Sensortyp eine eigene Anschlussmodulvariante einzusetzen. Andererseits müssen auch keine an die verschiedenen Feldbussysteme angepassten Ausführungen der Sensoren hergestellt werden. Dadurch ergibt sich in der Herstellung, der Lagerhalterung und im Betrieb eine wesentliche Vereinfachung und eine damit verbundene Kostenersparnis.

Bevorzugt ist, wenn die Busschnittstelle zur Datenkommunikation mit einer Mehrzahl von verschiedenen Feldbussystemen ausgebildet ist. Durch die damit verbundene Reduzierung von Anschlussmodulvarianten ergibt sich eine weitere Rationalisierung sowie eine universelle Verwendbarkeit des Anschlussmoduls.

Vorteilhafterweise können mehrere Sensorschnittstellen und/oder mehrere Busschnittstellen zum insbesondere gleichzeitigen Anschluss mehrerer Sensoren und/oder mehrerer Bussysteme vorgesehen sein. Es ist also nicht nur möglich, verschiedene Sensoren und/oder Feldbussysteme mittels unterschiedlicher Software an das Anschlussmodul anzuschließen, sondern es können in diesem Fall auch gleichzeitig oder zeitlich nacheinander Sensoren mit verschiedenen Hardware-Schnittstellen und/oder Feldbusse mit verschiedenen Hardware-Schnittstellen an ein und dasselbe Anschlussmodul angeschlossen werden.

In einer bevorzugten Ausführungsform ist das Anschlussmodul zur Versorgung des Sensors mit einer Betriebsspannung ausgebildet. Der Sensor benötigt also keine eigene Spannungsversorgung, sondern wird durch die Spannungsversorgung des Anschlussmoduls mitversorgt. Hierdurch ergibt sich neben der Einsparung einer Spannungsversorgung auch ein verringerter Verkabelungsaufwand.

Bei einer weiteren bevorzugten Ausführungsform ist die Sensorschnittstelle zur Versorgung des Sensors mit einer Betriebsspannung über zur Datenübertragung vorgesehene Leitungen ausgebildet. Das bedeutet, dass Versorgungsspannung und Daten über die gleichen Leitungen übertragen werden, wodurch sich der Verkabelungsaufwand noch weiter reduziert.

Die Lösung der Erfindung erfolgt auch durch ein Verfahren gemäß Anspruch 12 und insbesondere durch ein Verfahren zum Betreiben eines Anschlussmoduls, welches über eine Sensorschnittstelle mit einem Sensor und über eine Busschnittstelle mit einem Feldbus gekoppelt ist, mit den folgenden, automatisch ablaufenden Schritten:
- Übermitteln einer sensorspezifischen, im Sensor gespeicherten und/oder im Sensor erzeugten Steuerungs- oder Beschreibungsdatei über die Sensorschnittstelle an das Anschlussmodul;
- Programmieren eines Prozessors des Anschlussmoduls durch die übermittelte und/oder durch eine auf Basis der übermittelten Beschreibungsdatei erzeugte Steuerungsdatei;
- vom programmierten Prozessor kontrolliertes Empfangen von vom Sensor an das Anschlussmodul übermittelten Daten;
- vom programmierten Prozessor kontrolliertes Konvertieren der Daten bezüglich ihres Formats; und
- vom programmierten Prozessor kontrolliertes Ausgeben der konvertierten Daten über die mit dem Feldbus verbundene Busschnittstelle, wobei das Anschlussmodul gegenüber dem Feldbus das Verhalten des jeweils angeschlossenen Sensors zeigt.

Zu Beginn des Betriebs wird die im Sensor gespeicherte oder erzeugte Steuerungs- oder Beschreibungsdatei automatisch oder auf Anforderung an das Anschlussmodul übermittelt. Anschließend wird ein im Anschlussmodul vorgesehener Prozessor auf Basis der übermitteln Dateien initialisiert. Der Prozessor kontrolliert nun den Empfang von Sensordaten und deren Ausgabe an der Busschnittstelle, wobei er eine Konvertierung des Datenformats vornimmt. Im Anschlussmodul wird also gemäß dem eingangs erwähnten Bild ein dem im Sensor existenten Regal entsprechendes neues Regal aufgebaut, das der Übermittlung aller möglichen Objekttypen des Sensors dient. Das Anschlussmodul übernimmt dadurch die Eigenschaften und das Verhalten des Sensors und repräsentiert diese nach außen, d.h. gegenüber dem Feldbus, als ein Stellvertreter des Sensors.

Bevorzugt ist, wenn die Schaltung zum Datenaustausch vom Feldbus übermittelte Daten von der Busschnittstelle empfängt.

Weiterhin bevorzugt kann die Schaltung zum Datenaustausch von der Busschnittstelle empfangene Daten an der Sensorschnittstelle ausgeben. Hierdurch wird eine bidirektionale Kommunikation zwischen dem Anschlussmodul und dem Feldbus bzw. dem Sensor, also letztlich auch zwischen Feldbus und Sensor, ermöglicht. Das Anschlussmodul bzw. der Sensor können auf diese Weise auch Daten empfangen, die von anderen mit dem Feldbus verbundenen Geräten ausgeben wurden.

Vom Sensor und/oder vom Feldbus übermittelte Daten können in der Schaltung des Anschlussmoduls zwischengespeichert werden. Beispielsweise kann das Anschlussmodul vom Feldbus übermittelte Anfragen für einen bestimmten Messwert unmittelbar beantworten, wenn dieser Messwert im Anschlussmodul zwischengespeichert ist. Der zwischengespeicherte Messwert wird beispielsweise in vorgegebenen Intervallen oder bei einer vom Sensor festgestellten Änderung der Messgröße aktualisiert. Das ist insbesondere dann sinnvoll, wenn der Sensor zur Durchführung der Messung eine gewisse Zeit benötigt.

Vorteilhafterweise kann das Anschlussmodul nach einem Betriebsstart eine selbsttätige Anmeldung als Sensor am Feldbus durchführen.

Bevorzugt ist, wenn das Anschlussmodul die Anwesenheit und/oder Funktionsfähigkeit des Sensors überwacht.

In einer vorteilhaften Ausführungsform kann das Anschlussmodul nach einem Austausch des Sensors und/oder nach einer Unterbrechung der Datenkommunikation mit dem Sensor eine selbsttätige Anmeldung am Feldbus durchführen.

Bevorzugt ist ferner, wenn das Anschlussmodul Steuerungsbefehle von zumindest einem weiteren mit dem Feldbus verbundenen Gerät empfängt und aus den empfangenen Steuerungsbefehlen an den Sensor gerichtete Steuerbefehle generiert und an diesen übermittelt. Hierdurch ist es zum Beispiel möglich, dass der Sensor auf Anforderung durch das Gerät eine aktuelle Messung durchführt, deren Ergebnis wiederum an das Gerät übermittelt wird.

Weitere Ausführungsformen der Erfindung sind in den Unteransprüchen beschrieben. Die Erfindung wird nachfolgend anhand eines Ausführungsbeispiels unter Bezugnahme auf die Zeichnungen erläutert. In diesen zeigt:
- Fig. 1: den schematischen Aufbau eines mit einem Feldbus und einem Sensor verbundenen erfindungsgemäßen Anschlussmoduls; und
- Fig. 2: ein Flussdiagramm des Verfahrens zum Betreiben des Anschlussmoduls gemäß Fig. 1.

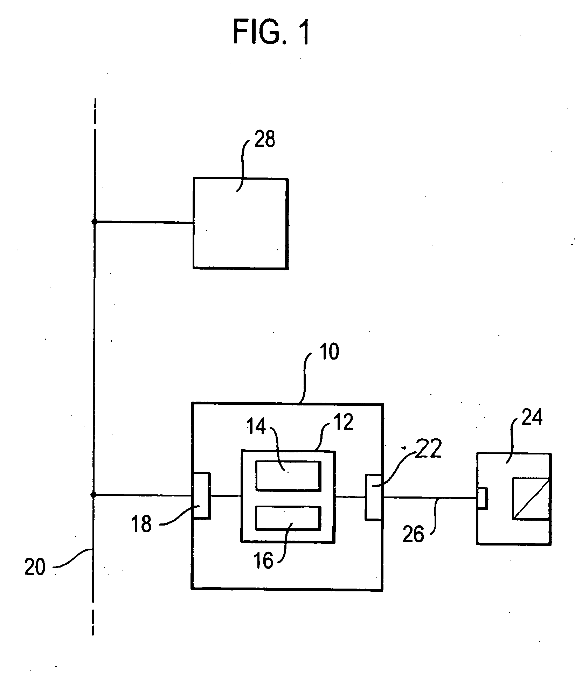

Das in Fig. 1 dargestellte Blockschaltbild zeigt ein Anschlussmodul 10 mit einer Schaltung 12, die einen Prozessor 14 und einen Speicher 16 umfasst.

Die Schaltung 12 ist über eine im Anschlussmodul 10 vorhandene Busschnittstelle 18 mit einem hier nur abschnittsweise dargestellten Feldbus 20 verbunden.

Weiterhin ist die Schaltung 12 mit einer ebenfalls im Anschlussmodul 10 vorhandenen Sensorschnittstelle 22 verbunden, an die ein Sensor 24 über eine Sensorleitung 26 angeschlossen ist. Die Verbindung zwischen Sensorschnittstelle 22 und Sensor 24 kann z.B. als Ethernet-Verbindung ausgebildet sein.

Die zum Betrieb des Sensors 24 nötige Versorgungsspannung wird gleichzeitig mit den Daten über die Sensorleitung 26 übertragen, wobei hier das Verfahren "Power over Ethernet (PoE)" verwendet werden kann.

Das Anschlussmodul 10 selbst wird über eine hier nicht dargestellte Stromversorgung mit der Betriebsspannung versorgt. Der Feldbus 20 kann beispielsweise als PROFIBUS ausgebildet sein.

An den Feldbus 20 ist ein Steuergerät 28 angeschlossen, das die Funktion einer Zentralsteuerung (Master) erfüllt.

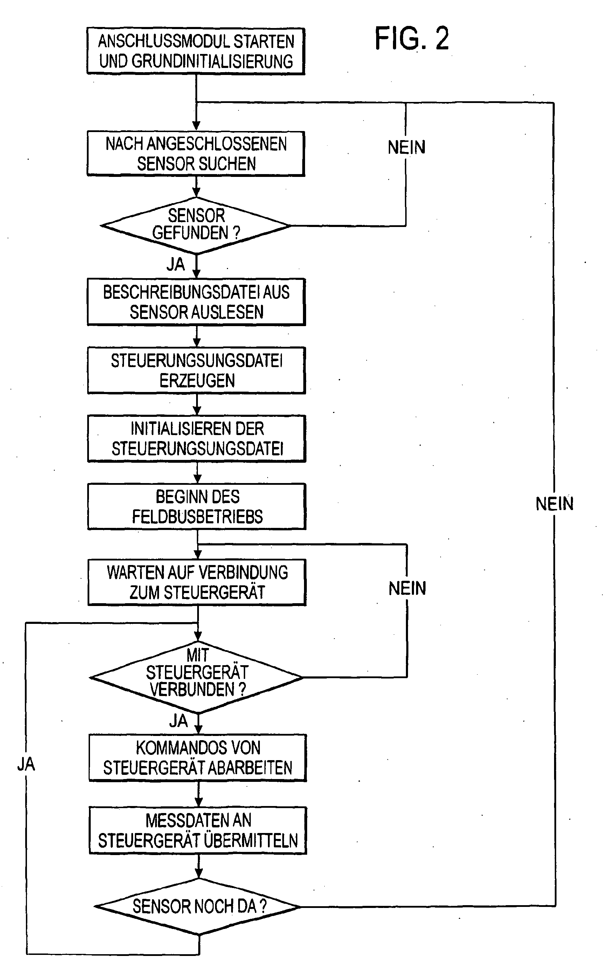

Anhand des in Fig. 2 dargestellten Flussdiagramms wird im Folgenden die Initialisierung des Anschlussmoduls 10 und der laufende Betrieb beschrieben.

Zunächst wird das Anschlussmodul 10 gestartet und eine Grundinitialisierung durchgeführt.

Anschließend sucht das Anschlussmodul 10 nach einem angeschlossenen Sensor 24 und versucht mit diesem in Kommunikation zu treten. Dieser Schritt wird so lange wiederholt, bis ein Sensor 24 gefunden und die Kommunikation mit diesem hergestellt wird. Die Wiederholung dieses Schrittes kann beispielsweise auch bei einer Betriebsstörung oder bei einem Austausch des Sensors 24 durchgeführt werden.

Im nächsten Schritt wird eine im Sensor 24 abgelegte Beschreibungsdatei aus dem Sensor 24 ausgelesen. Diese Beschreibungsdatei ist beispielsweise im Datenformat XML (Extended Markup Language) abgelegt und beschreibt alle über die Datenkommunikation erreichbaren Variablen, Methoden, Nachrichten und Ereignisse.

Aus dieser an das Anschlussmodul 10 übertragenen Beschreibungsdatei wird nun im Anschlussmodul 10 eine Steuerungsdatei zur Steuerung des Datenaustausches erzeugt.

Mit der nun folgenden Initialisierung der Steuerungsdatei wird der Prozessor 14 für den Datenaustausch mit dem Feldbus 20 programmiert.

Im nächsten Schritt wartet das Anschlussmodul 10 so lange, bis es mit dem Steuergerät 28 verbunden ist. Erfolgt eine Datenanfrage durch das Steuergerät 28, wird diese durch die Übermittlung von Messdaten oder Statusinformationen beantwortet. Wenn ein Kommando vom Steuergerät 28 übermittelt wird, welches zum Beispiel eine Aufforderung an den Sensor 24 zur regelmäßigen Lieferung von Daten an das Steuergerät 28 sein kann, erfolgt nun die Abarbeitung dieses Kommandos.

Das Anschlussmodul 10 überprüft nun nochmals die Anwesenheit des Sensors 24. Falls dies der Fall ist, wird ebenfalls die Anwesenheit des Steuergerätes 28 überprüft. Wenn diese Überprüfung ebenfalls ein positives Resultat liefert, ist das Anschlussmodul 10 zur Bearbeitung weiterer Datenanfragen durch das Steuergerät 28 bereit.

Falls die Überprüfung auf eine Anwesenheit des Sensors 24 negativ ausfällt, wird zum zweiten Schritt des Flussdiagramms zurückgesprungen und wiederum nach einem angeschlossenen Sensor 24 gesucht. Wenn ein Sensor 24 gefunden wird, erfolgen die bereits zuvor beschriebenen Schritte.

Dadurch wird die Betriebsbereitschaft von Anschlussmodul 10 und Sensor 24 nach einer zeitweiligen Unterbrechung oder nach einem Austausch des Sensors 24 automatisch wiederhergestellt.

Wird ein erster Sensor 24 durch einen zweiten Sensor verschiedenen Typs, z.B. ein optoelektronischer Sensor durch einen Temperatursensor ersetzt, wird aufgrund der Beschreibungsdatei des zweiten Sensors eine neue Steuerungsdatei erzeugt, die spezifisch für den zweiten Sensor ist und damit in der Lage ist, sämtliche Objekte dieses Sensors zu verarbeiten.

### Bezugszeichenliste

- 10: Anschlussmodul
- 12: Schaltung
- 14: Prozessor
- 16: Speicher
- 18: Busschnittstelle
- 20: Feldbus
- 22: Sensorschnittstelle
- 24: Sensor
- 26: Sensorleitung
- 28: Steuergerät

## Patentansprüche

1. Anschlussmodul (10) zum Anschließen eines Sensors (24), insbesondere eines optoelektronischen Sensors, an einen Feldbus (20), mit
wenigstens einer Sensorschnittstelle (22), die zum Verbinden des Anschlussmoduls (10) mit einer Schnittstelle des Sensors (24) eingerichtet ist, wenigstens einer Busschnittstelle (18), die zum Verbinden des Anschlussmoduls (10) mit einer Schnittstelle eines Feldbusses (20) eingerichtet ist, und
einer Schaltung (12) zum Datenaustausch, die eingerichtet ist um Daten von der Sensorschnittstelle (22) zu empfangen und bezüglich ihres Formats zu konvertieren und um die konvertierten Daten an der Busschnittstelle (18) auszugeben,
**dadurch gekennzeichnet,**
**dass** die Schaltung (12) zum Datenaustausch einen Speicher (16) zur Zwischenspeicherung einer über die Sensorschnittstelle (22) von dem Sensor (24) empfangenen, sensorspezifischen Steuerungs- oder Beschreibungsdatei umfasst, wobei die Steuerungs- oder Beschreibungsdatei in der Schaltung (12) derart verarbeitbar ist; dass das Anschlussmodul (10) gegenüber dem Feldbus (20) das Verhalten des jeweils angeschlossenen Sensors (24) zeigt.

2. Anschlussmodul nach Anspruch 1,
**dadurch gekennzeichnet,**
**dass** die Schaltung (12) einen durch die gespeicherte und/oder durch eine auf Basis der Beschreibungsdatei erzeugte Steuerungsdatei programmierbaren Prozessor (14) umfasst.

3. Anschlussmodul nach Anspruch 1 oder 2,
**dadurch gekennzeichnet,**
**dass** die Steuerungs- oder Beschreibungsdatei eine sensorspezifische Geräteidentifikation für den jeweiligen Feldbus (20) enthält.

4. Anschlussmodul nach einem der vorhergehenden Ansprüche, **dadurch gekennzeichnet,**
**dass** die Schaltung (12) zum Datenaustausch zum Empfang von Daten von der Busschnittstelle (18) ausgelegt ist.

5. Anschlussmodul nach Anspruch 4,
**dadurch gekennzeichnet,**
**dass** die Schaltung (12) zum Datenaustausch zur Ausgabe der von der Busschnittstelle (18) empfangenen Daten an der Sensorschnittstelle (22) ausgelegt ist.

6. Anschlussmodul nach einem der vorhergehenden Ansprüche,
**dadurch gekennzeichnet,**
**dass** das Anschlussmodul (10) zur selbsttätigen Anmeldung am Feldbus (20) nach einem Betriebsstart ausgebildet ist.

7. Anschlussmodul nach einem der vorhergehenden Ansprüche,
**dadurch gekennzeichnet,**
**dass** das Anschlussmodul (10) zur Überwachung der Anwesenheit und/oder Funktionsfähigkeit des Sensors (24) ausgebildet ist.

8. Anschlussmodul nach einem der vorhergehenden Ansprüche,
**dadurch gekennzeichnet,**
**dass** das Anschlussmodul (10) zur selbsttätigen Anmeldung am Feldbus (20) nach einem Austausch des Sensors (24) und/oder nach einer Unterbrechung der Datenkommunikation mit dem Sensor (24) ausgebildet ist.

9. Anschlussmodul nach einem der vorhergehenden Ansprüche,
**dadurch gekennzeichnet,**
**dass** die Sensorschnittstelle (22) zur Datenkommunikation mit einer Mehrzahl von verschiedenen Sensortypen ausgebildet ist.

10. Anschlussmodul nach einem der vorhergehenden Ansprüche,
**dadurch gekennzeichnet,**
**dass** die Sensorschnittstelle (22) zur Kommunikation mit einer Standardschnittstelle eines Sensors (24), insbesondere mit Standardschnittstellen verschiedener Sensortypen ausgebildet ist.

11. Anschlussmodul nach einem der vorhergehenden Ansprüche,
**dadurch gekennzeichnet,**
**dass** die Busschnittstelle (18) zur Datenkommunikation mit einer Mehrzahl von verschiedenen Feldbussystemen ausgebildet ist.

12. Anschlussmodul nach einem der vorhergehenden Ansprüche,
**dadurch gekennzeichnet,**
**dass** mehrere Sensorschnittstellen (22) und/oder mehrere Busschnittstellen (18) zum insbesondere gleichzeitigen Anschluss mehrerer Bussysteme und/oder mehrerer Sensoren (24) vorgesehen sind.

13. Anschlussmodul nach einem der vorhergehenden Ansprüche,
**dadurch gekennzeichnet,**
**dass** das Anschlussmodul (10) zur Versorgung des Sensors (24) mit einer Betriebsspannung ausgebildet ist.

14. Anschlussmodul nach Anspruch 13,
**dadurch gekennzeichnet,**
**dass** die Sensorschnittstelle (22) zur Versorgung des Sensors (24) mit einer Betriebsspannung über zur Datenübertragung vorgesehene Leitungen (26) ausgebildet ist.

15. Verfahren zum Betreiben eines Anschlussmoduls (10), welches über eine Sensorschnittstelle (22) mit einem Sensor (24) und über eine Busschnittstelle (18) mit einem Feldbus (20) gekoppelt ist, mit den folgenden, automatisch ablaufenden Schritten:
- Übermitteln einer sensorspezifischen, im Sensor (24) gespeicherten und/oder im Sensor (24) erzeugten Steuerungs- oder Beschreibungsdatei über die Sensorschnittstelle (22) an das Anschlussmodul (10);
- Programmieren eines Prozessors (14) des Anschlussmoduls durch die übermittelte und/oder durch eine auf Basis der übermittelten Beschreibungsdatei erzeugte Steuerungsdatei;
- vom programmierten Prozessor (14) kontrolliertes Empfangen von vom Sensor (24) an das Anschlussmodul (10) übermittelten Daten;
- vom programmierten Prozessor (14) kontrolliertes Konvertieren der Daten bezüglich ihres Formats; und
- vom programmierten Prozessor (14) kontrolliertes Ausgeben der konvertierten Daten über die mit dem Feldbus (20) verbundene Busschnittstelle (18), wobei das Anschlussmodul (10) gegenüber dem Feldbus (20) das Verhalten des jeweils angeschlossenen Sensors (24) zeigt.

16. Verfahren nach Anspruch 15,
**dadurch gekennzeichnet,**
**dass** die Schaltung (10) zum Datenaustausch vom Feldbus (20) übermittelte Daten von der Busschnittstelle (18) empfängt.

17. Verfahren nach Anspruch 16,
**dadurch gekennzeichnet,**
**dass** die Schaltung (10) zum Datenaustausch von der Busschnittstelle (18) empfangene Daten an der Sensorschnittstelle (22) ausgibt.

18. Verfahren nach einem der Ansprüche 15 bis 17,
**dadurch gekennzeichnet,**
**dass** das Anschlussmodul (10) nach einem Betriebsstart eine selbsttätige Anmeldung als Sensor (24) am Feldbus (20) durchführt.

19. Verfahren nach einem der Ansprüche 15 bis 18,
**dadurch gekennzeichnet,**
**dass** das Anschlussmodul (10) die Anwesenheit und/oder Funktionsfähigkeit des Sensors (24) überwacht.

20. Verfahren nach einem der Ansprüche 15 bis 19,
**dadurch gekennzeichnet,**
**dass** das Anschlussmodul (10) nach einem Austausch des Sensors (24) und/oder nach einer Unterbrechung der Datenkommunikation mit dem Sensor (24) eine selbsttätige Anmeldung am Feldbus (20) durchführt.

21. Verfahren nach einem der Ansprüche 15 bis 20,
**dadurch gekennzeichnet,**
**dass** das Anschlussmodul (10) Steuerungsbefehle von zumindest einem mit dem Feldbus (20) verbundenen Gerät (28) empfängt und aus den empfangenen Steuerungsbefehlen an den Sensor (24) gerichtete Steuerbefehle generiert und an diesen übermittelt.

## Claims

1. A connector module (10) for the connection of a sensor (24), in particular of an optoelectronic sensor, to a fieldbus (20), comprising at least one sensor interface (22) configured for the connection of the connector module (10) to an interface of the sensor (24);
at least one bus interface (18) configured for the connection of the connector module (10) to an interface of a fieldbus (20); and
a circuit (12) for the exchange of data configured to receive data from the sensor interface (22) and to convert them with respect to their format and to output the converted data at the bus interface (18),
**characterized in that**
the circuit (12) for the exchange of data includes a memory (16) for the intermediate storage of a sensor-specific control file or description file received by the sensor (20) via the sensor interface (22), with the control file or description file being able to be processed in the circuit (12) such that the connector module (10) shows the behavior of the respective connected sensor (24) with respect to the fieldbus (20).

2. A connector module in accordance with claim 1, **characterized in that** the circuit (12) includes a processor (14) programmable by the stored control file and/or by a control file generated on the basis of the description file.

3. A connector module in accordance with claim 1 or claim 2, **characterized in that** the control file or description file contains a sensor-specific device identification for the respective fieldbus (20).

4. A connector module in accordance with any one of the preceding claims, **characterized in that** the circuit (12) for the exchange of data is configured for the reception of data from the bus interface (18).

5. A connector module in accordance with claim 4, **characterized in that** the circuit (12) for the exchange of data is configured for the output of the data received from the bus interface (18) at the sensor interface (22).

6. A connector module in accordance with any one of the preceding claims, **characterized in that** the connector module (10) is made for the automatic registration at the fieldbus (20) after an operating start.

7. A connector module in accordance with any one of the preceding claims, **characterized in that** the connector module (10) is made for the monitoring of the presence and/or functional capability of the sensor (24).

8. A connector module in accordance with any one of the preceding claims, **characterized in that** the connector module (10) is made for the automatic registration at the fieldbus (20) after an exchange of the sensor (24) and/or after an interruption of the data communication with the sensor (24).

9. A connector module in accordance with any one of the preceding claims, **characterized in that** the sensor interface (22) is made for data communication with a plurality of different sensor types.

10. A connector module in accordance with any one of the preceding claims, **characterized in that** the sensor interface (22) is made for communication with a standard interface of a sensor (24), in particular with standard interfaces of different sensor types.

11. A connector module in accordance with any one of the preceding claims, **characterized in that** the bus interface (18) is made for data communication with a plurality of different fieldbus systems.

12. A connector module in accordance with any one of the preceding claims, **characterized in that** a plurality of sensor interfaces (22) and/or a plurality of bus interfaces (18) are provided for the connection, in particular the simultaneous connection, of a plurality of bus systems and/or a plurality of sensors (24).

13. A connector module in accordance with any one of the preceding claims, **characterized in that** the connector module (10) is made for the supply of the sensor (24) with an operating voltage.

14. A connector module in accordance with claim 13, **characterized in that** the sensor interface (22) is made for the supply of the sensor (24) with an operating voltage via lines (26) provided for the data transmission.

15. A method of operating a connector module (10) which is coupled via a sensor interface (22) to a sensor (24) and via a bus interface (18) to a fieldbus (20), comprising the following steps which run automatically:
- transmitting a sensor-specific control file or description file stored in the sensor (24) and/or generated in the sensor (24) to the connector module (10) via the sensor interface (22);
- programming a processor (14) of the connector module by the transmitted control file and/or by a control file generated on the basis of the transmitted description field;
- reception controlled by the programmed processor (14) of data transmitted to the connector module (10) from the sensor (24);
- conversion controlled by the programmed processor (14) of the data with respect to their format; and
- output controlled by the programmed processor (14) of the converted data via the bus interface (18) connected to the fieldbus (20), with the connector module (10) showing the behavior of the respective connected sensor (24) with respect to the fieldbus (20).

16. A method in accordance with claim 15, **characterized in that** the circuit (10) for the exchange of data receives data transmitted from the fieldbus (20) from the bus interface (18).

17. A method in accordance with claim 16, **characterized in that** the circuit (10) for the exchange of data outputs data received from the bus interface (18) at the sensor interface (22).

18. A method in accordance with any one of the claims 15 to 17, **characterized in that** the connector module (10) carries out an automatic registration as a sensor (24) at the fieldbus (20) after an operating start.

19. A method in accordance with any one of the claims 15 to 18, **characterized in that** the connector module (10) monitors the presence and/or functional capability of the sensor (24).

20. A method in accordance with any one of the claims 15 to 19, **characterized in that** the connector module (10) carries out an automatic registration at the fieldbus (20) after a replacement of the sensor (24) and/or after an interruption of the data communication with the sensor (24).

21. A method in accordance with any one of the claims 15 to 20, **characterized in that** the connector module (10) receives control commands from at least one device (28) connected to the fieldbus (20) and generates control commands directed to the sensor (24) from the received control commands and transmits them to it.

## Revendications

1. Module de connexion (10) pour la connexion d'un capteur (24), en particulier d'un capteur optoélectronique, à un bus de champ (20), comprenant
au moins une interface de capteur (22), qui est conçue pour la liaison du module de connexion (10) avec une interface du capteur (24),
au moins une interface de bus (18), qui est conçue pour la liaison du module de connexion (10) avec une interface d'un bus de champ (20), et
un circuit (12) pour l'échange de données, qui est conçu pour recevoir des données provenant de l'interface de capteur (22), pour les convertir pour ce qui concerne leur format et pour délivrer les données converties à l'interface de bus (18),
**caractérisé en ce que**
le circuit (12) pour l'échange de données comprend une mémoire (16) pour la mémorisation intermédiaire d'un fichier de commande ou fichier descriptif spécifique au capteur et reçue par le capteur (24) via l'interface de capteur (22), ledit fichier de commande ou fichier descriptif étant susceptible d'être traité dans le circuit (12) de telle manière que, vis-à-vis du bus de champ (20), le module de connexion (10) présente le comportement du capteur respectivement connecté (24).

2. Module de connexion selon la revendication 1,
**caractérisé en ce que** le circuit (12) comprend un processeur (14) programmable via le fichier de commande mémorisé et/ou via un fichier de commande généré à partir du fichier descriptif.

3. Module de connexion selon la revendication 1 ou 2,
**caractérisé en ce que** le fichier de commande ou fichier descriptif contient une identification d'appareil spécifique au capteur pour le bus de champ (20) respectif.

4. Module de connexion selon l'une des revendications précédentes, **caractérisé en ce que** le circuit (12) pour l'échange de données est conçu pour la réception de données provenant de l'interface de bus (18).

5. Module de connexion selon la revendication 4,
**caractérisé en ce que** le circuit (12) pour l'échange de données est conçu pour délivrer les données reçues de l'interface de bus (18) à l'interface de capteur (22).

6. Module de connexion selon l'une des revendications précédentes,
**caractérisé en ce que** le module de connexion (10) est réalisé pour, selon un mode de fonctionnement, s'annoncer automatiquement au bus de champ (20).

7. Module de connexion selon l'une des revendications précédentes,
**caractérisé en ce que** le module de connexion (10) est réalisé pour surveiller la présence et/ou la capacité de fonctionnement du capteur (24).

8. Module de connexion selon l'une des revendications précédentes,
**caractérisé en ce que** le module de connexion (10) est conçu pour, après un échange de capteur (24) et/ou après une interruption de la communication de données avec le capteur (24), s'annoncer automatiquement au bus de champ (20).

9. Module de connexion selon l'une des revendications précédentes,
**caractérisé en ce que** l'interface de capteur (22) est réalisée pour la communication de données avec une pluralité de différents types de capteurs.

10. Module de connexion selon l'une des revendications précédentes,
**caractérisé en ce que** l'interface de capteur (22) est réalisée pour la communication avec une interface standard d'un capteur (24), en particulier avec des interfaces standard de différents types de capteurs.

11. Module de connexion selon l'une des revendications précédentes,
**caractérisé en ce que** l'interface de bus (18) est réalisée pour la communication de données avec une pluralité de différents systèmes de bus de champ.

12. Module de connexion selon l'une des revendications précédentes,
**caractérisé en ce qu'**il est prévu plusieurs interfaces de capteur (22) et/ou plusieurs interfaces de bus (18), en particulier pour la connexion simultanée de plusieurs systèmes de bus et/ou plusieurs capteurs (24).

13. Module de connexion selon l'une des revendications précédentes,
**caractérisé en ce que** le module de connexion (10) est réalisé pour l'alimentation du capteur (24) avec une tension de service.

14. Module de connexion selon la revendication 13,
**caractérisé en ce que** l'interface de capteur (22) est réalisée en vue de l'alimentation du capteur (24) avec une tension de service via des lignes (26) prévues pour la transmission de données.

15. Procédé pour le fonctionnement d'un module de connexion (10), lequel est couplé à un capteur (24) via une interface de capteur (22) et à un bus de champ (20) via une interface de bus (18), comprenant les étapes suivantes, qui se déroulent automatiquement :
- transmission au module de connexion (10) d'un fichier de commande ou fichier descriptif, spécifique au capteur, mémorisé dans le capteur (24) et/ou engendré dans le capteur (24), via l'interface de capteur (22) ;
- programmation d'un processeur (14) du module de connexion au moyen du fichier de commande transmis et/ou au moyen du fichier de commande engendré sur la base du fichier descriptif transmis ;
- réception, contrôlée par le processeur programmé (14), de données transmises par le capteur (24) au module de connexion (10) ;
- conversion des données, contrôlées par le processeur programmé (14), pour ce qui concerne leur format ; et
- fourniture, contrôlée par le processeur programmé (14), des données converties via l'interface de bus (18) relié au bus de champ (20), de sorte que le module de connexion (10) présente vis-à-vis du bus de champ (20) le comportement du capteur respectivement connecté (24).

16. Procédé selon la revendication 15,
**caractérisé en ce que** le circuit (10) pour l'échange de données reçoit de l'interface de bus (18) des données transmises depuis le bus de champ (20).

17. Procédé selon la revendication 16,
**caractérisé en ce que** le circuit (10) pour l'échange de données délivre à l'interface de capteur (22) des données reçues depuis l'interface de bus (18).

18. Procédé selon l'une des revendications 15 à 17,
**caractérisé en ce que** le module de connexion (10) exécute, selon un mode de fonctionnement, une annonce automatique en tant que capteur (24) au bus de champ (20).

19. Procédé selon l'une des revendications 15 à 18,
**caractérisé en ce que** le module de connexion (10) surveille la présence et/ou la capacité de fonctionnement du capteur (24).

20. Procédé selon l'une des revendications 15 à 19,
**caractérisé en ce que** le module de connexion (10) exécute, après un échange de capteur (24) et/ou après une interruption de la communication de données avec le capteur (24), une annonce automatique au bus de champ (20).

21. Procédé selon l'une des revendications 15 à 20,
**caractérisé en ce que** le module de connexion (10) reçoit des ordres de commande depuis au moins un appareil (28) raccordé au bus de champ (20), et génère à partir des ordres de commande reçus des ordres de commande destinés au capteur (24) et les transmet à celui-ci.
